# EUROPÄISCHE PATENTSCHRIFT

(11) **EP 0 352 700 B1**
(45) Veröffentlichungstag und Bekanntmachung des Hinweises auf die Patenterteilung: **23.03.1994**
(21) Anmeldenummer: 89113597.2
(22) Anmeldetag: 24.07.1989
(51) Int. Cl.: H04Q 3/00, H04M 3/20, H04M 9/00

(54) **Verfahren zur Durchführung einer leistungsmerkmalsbezogenen Steuerprozedur in einem rechnergesteuerten Kommunikationssystem insbesondere einem Key-Kommunikationssystem, mit der Möglichkeit des sogenannten "Anklopfens"**
Method for realizing a service-specific command procedure in a calculator-controlled communication system, especially a key telephone system, with the possibility of breaking-in
Méthode pour réaliser une procédure de commande de service spécifique dans un système de communication commandé par calculateur en particulier un système de communication à touches avec la possibilité de branchement sur une connexion existante

(30) Priorität: 26.07.1988 DE 3825384
(43) Veröffentlichungstag der Anmeldung: 31.01.1990
(73) Patentinhaber: SIEMENS AKTIENGESELLSCHAFT, 80333 München (DE)
(72) Erfinder: Böttger, Detlev, W-5840 Schwerte 4 (DE)

(56) Entgegenhaltungen:
- EP-A- 0 195 635
- INTERNATIONAL SWITCHING SYMPOSIUM 1987, Phoenix, Arizona, 15. - 20. März 1987, Seiten 343-351, IEEE, New York, US; R.L. BENNETT et al.: "5ESSTM Switch ISDN services"

## Beschreibung

Die Erfindung betrifft ein Verfahren zur Durchführung einer leistungsmerkmalsbezogenen Steuerprozedur im Zusammenhang mit der Möglichkeit, in einem rechnergesteuerten Kommunikationssystem, insbesondere einem Key-Kommunikationssystem, einem Teilnehmer, der sich in einer Gesprächsverbindung befindet, einen ihn betreffenden dringenden Verbindungswunsch durch eine darauf hinweisende Information anzukündigen, wobei dieser Teilnehmer zur Beantwortung und zur Herstellung einer Verbindung mit dem diese Information auslösenden Teilnehmer eine bestimmte Prozedur vornehmen kann.

Modern konzipierte Kommunikationssysteme sind nicht nur zur eigentlichen Vermittlungssteuerung, sondern auch zu einer Steuerung bzw. Realisierung zusätzlicher, über den eigentlichen Vermittlungsvorgang hinausgehender Steuervorgänge befähigt. Solche zusätzlichen Funktionen werden im allgemeinen als Leistungsmerkmale bezeichnet, wobei eine große Anzahl unterschiedlichster Leistungsmerkmale bekannt ist. Derartige Leistungsmerkmale können entweder bei Belegen der Vermittlungseinrichtung oder aber während einer bereits bestehenden Gesprächsverbindung eingeleitet werden. Bestimmte Leistungsmerkmale sind von der Art und dem Funktionsumfang der verwendeten Endgeräte abhängig. Zu den Leistungsmerkmalen zählen beispielsweise akustische Hinweise für Teilnehmer, die sich in einem Wartezustand befinden, die Verhinderung unerwünschter Verbindungen, der automatische Rückruf und auch die Anzeige von ganz bestimmten teilnehmer- bzw. zustandsbezogenen Informationen und das Anklopfen. Die genannten Leistungsmerkmale sind beispielsweise in folgender Veröffentlichung abgehandelt: "International Switching Symposium, 1987, Phoenix, Arizona, 15.-20. März 1987, Seiten 343 bis 351, IEEE, New York"; R.L. Bennett et al: "5ESSTM SWITCH ISDN-SERVICES".

Vermittels des Leistungsmerkmals "Anklopfen", für dessen Aktivierung der Teilnehmer üblicherweise eine Handhabung an seinem Endgerät vorzunehmen hat, kann ein besetzt vorgefundener Teilnehmer darüber informiert werden, daß ein anderer Teilnehmer ihn dringend zu sprechen wünscht.

Es ist nun die Aufgabe der Erfindung, die Aktivierung des Leistungsmerkmals "Anklopfen" in Abhängigkeit von dem vermittlungstechnischen Zustand der gewünschten Teilnehmerstelle zu vereinfachen. Dies wird bei einem Verfahren der eingangs genannten Art dadurch erreicht, daß diese hinweisende Information automatisch beim Anwählen einer sich im Besetztzustand befindlichen Teilnehmerstelle nach Ablauf einer bestimmten Zeitspanne durch die die Verbindungsphasen überwachende Rechnersteuerung veranlaßt wird, sofern für diese betreffende Teilnehmerstelle nicht eine externe Verbindung in den Wartezustand geschaltet ist, daß erst nach der erneuten Wiederannahme dieser wartenden Gesprächsverbindung die hinweisende Information abgesetzt wird, falls durch den von der anfordernden Teilnehmerstelle aufrechterhaltenen Teilnehmerleitungsschleifenschluß das weitere Bestehen des Verbindungswunsches signalisiert wird.

Die erfindungsgemäß ohne jegliche Handhabung durch den Teilnehmer eingeleitete Prozedur des "Anklopfens" wird also immer dann unterbunden, wenn für die gewünschte Teilnehmerstelle ein Gespräch mit einer als höherwertig eingestuften Priorität ansteht. Als solches Gespräch wird eine externe Verbindung betrachtet, die sich im Wartezustand befindet. Es wird also durch das System zunächst der wartende externe Teilnehmer bedient. Der Teilnehmer kann also erst dann auf das "Anklopfen" reagieren, wenn er in die wartende Verbindung eingetreten ist. Damit wird vermieden, daß der externe Teilnehmer unverhältnismäßig lange bis zum Wiedereintritt in seine ursprüngliche Gesprächsverbindung warten muß.

Gemäß einer Weiterbildung der Erfindung wechselt für den die Information auslösenden Teilnehmer die Signalisierung mit dem tatsächlich erfolgten Absetzen dieser Information von den bis dahin für ihn angelegten Besetztton in einen besonderen Rufton. Er ist also über den Zeitpunkt informiert, zu dem der gewünschte Teilnehmer das "Anklopfen" registrieren kann.

Ist ein Display vorhanden, so bewirkt die vom anfordernden Teilnehmer initiierte Information neben dem besonderen Hinweiston eine entsprechende Darstellung auf dem Display des dem gewünschten Teilnehmer zugeordneten Endgerätes.

Weitere vorteilhafte Ausgestaltungen der Erfindung sind den restlichen Unteransprüchen zu entnehmen.

Das erfindungsgemäße Verfahren wird nachstehend anhand einer Figur erläutert.

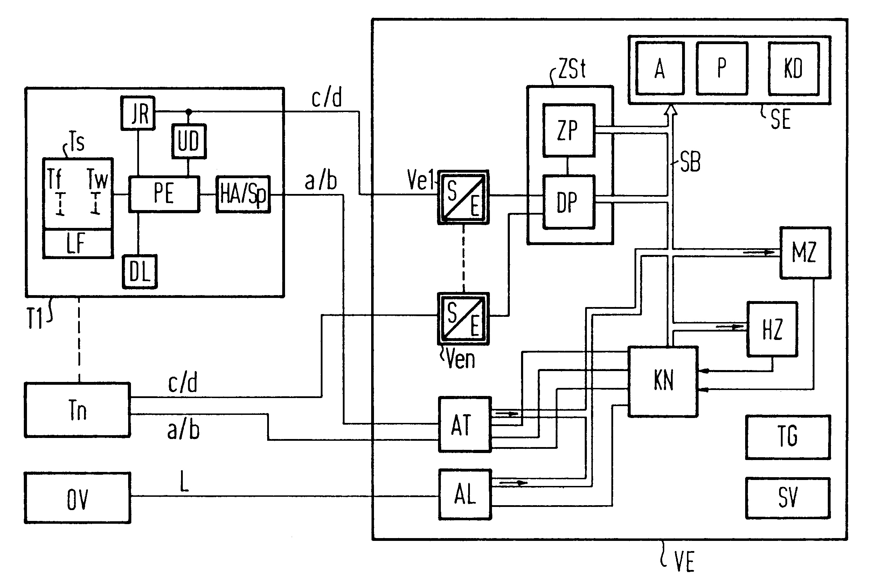

Die Figur zeigt eine schematische Darstellung eines sogenannten Key-Kommunikationssystems VE, an das Teilnehmerendeinrichtungen T1...Tn sternförmig angeschlossen sind. Die Sprachübertragung soll im Ausführungsbeispiel auf analoge Weise erfolgen. Für den Anschluß der Key-Endeinrichtungen wird eine vieradrige Anschlußleitung verwendet, die jeweils aus einem die Nutzverbindung darstellenden Sprechadernpaar a/b und einem die Steuerverbindung darstellenden Signalisierungsadernpaar c/d besteht. Bei einem ausschließlich digitalen Vermittlungssystem wäre die Steuerverbindung und die für die Ubertragung der Sprachinformationen vorgesehene Nutzverbindung auf einer zweiadrigen Anschlußleitung realisierbar, wobei dann mindestens ein Nutzkanal und ein Steuerkanal für jede Endeinrichtung durch eine bestimmte Zeitlage gebildet wird. Der Steuerkanal übernimmt als Zeichenkanal die im Zusammenhang mit einem Vermittlungsvorgang notwendigen Synchronisierungs- bzw. Signalisierungsvorgänge.

Zur im wesentlichen prozeduralen Anpassung werden die Teilnehmerendeinrichtungen T1...Tn über eine Anschalteeinheit AT, die auch die Rufanschaltung beinhaltet, mit der elektronischen Koppeleinrichtung KN verbunden. Für die zu einer öffentlichen Vermittlungsstelle OV oder zu einem privaten Netz führenden Leitungen L erfolgt dies über die Anschalteeinheit AL. Die Steuerungsaufgaben des Systems übernimmt die zentrale Steuerrechnereinheit ZSt, die über einen Systembus SB mit einer Speichereinheit SE, den genannten Anschalteeinheiten AT bzw. AL und den weiteren Systemkomponenten, wie beispielsweise der Koppeleinrichtung KN, einer für die Bildung der Mehrfrequenzcodezeichen dienenden Einheit MZ und einer für die Erzeugung der Hörtöne zuständigen Einheit HZ verbunden ist. Die Aufgaben der zentralen Steuerrechnereinheit sind im Ausführungsbeispiel auf zwei Prozessoren verteilt. Der Prozessor ZP soll beispielsweise der vermittlungstechnischen Steuerung dienen und durch den Prozessor DP soll unter Einschaltung der ein Sendeteil S und ein Empfangsteil E enthaltenden Verarbeitungseinheit Ve die Signalisierungsbearbeitung vorgenommen werden. Eine solche Verarbeitungseinheit Ve ist jedem Signalisierungsadernpaar c/d zugeordnet.

Über diese Signalisierungsadern c/d wird eine wechselseitige Informationsübertragung zwischen einer Endeinrichtung T und der zentralen Steuerrechnereinheit ZSt vorgenommen. Wie dies für die einzelne Funktionskomponenten zeigende Endeinrichtung T1 angedeutet ist, können in einem Tastensatz Ts neben den Zifferntasten Tw der Wähltastatur weitere Funktionstasten Tf vorhanden sein. Durch die leitungs- bzw. teilnehmerindividuellen Tasten kann bei ihrer Betätigung unmittelbar eine Belegung der betreffenden Leitung, insbesondere einer externen Leitung L, und die Verbindungsherstellung zu einem internen Teilnehmer erfolgen. Es wird an jeder Endeinrichtung der vermittlungstechnische Zustand aller übrigen Endeinrichtungen und der Belegungszustand der einzelnen externen Leitungen angezeigt. Dies kann beispielsweise durch unterschiedliche Leuchtzustände von Leuchtdioden erfolgen, die in den jeweiligen Tasten integriert sind. Die Informationsübertragung von der zentralen Steuerrechnereinheit ZSt der Vermittlungseinrichtung zu den einzelnen Endeinrichtungen T1...Tn kann beispielsweise Einstellinformationen für diese Leuchtelemente betreffen. Die Steuerung erfolgt unter Mitwirkung der in einer jeden Endeinrichtung vorhandenen Steuereinheit PE. Im Ausführungsbeispiel sollen die von dem Kommunikationssystem VE zu einer Endeinrichtung über die Signalisierungsadern c/d übertragenen Informationen durch eine binäre Spannungsmodulation und die in der Gegenrichtung zu übertragenden Informationen durch eine binäre Strommodulation übermittelt werden. Mit letzterer wird dann beispielsweise die an der jeweiligen Endeinrichtung vorgenommene Betätigung einzelner Tasten signalisiert. Dies soll in Verbindung mit der Steuereinheit PE durch die Einheit JR erfolgen. Die in der Gegenrichtung aufgrund der vorgesehenen Spannungsmodulation an den jeweiligen Signalisierungsadern auftretenden Informationsbits werden in Zusammenwirkung mit der Steuereinheit PE durch die Einheit UD registriert. Sie führen dann zur Ansteuerung der genannten Leuchtelemente LF. Zusätzlich oder anstelle dieser Leuchtelemente kann auch eine entsprechende Darstellung auf einem Display DL erfolgen.

Über das jeweilige a/b-Adernpaar werden die Sprachinformationen übertragen. Mit diesen Sprechadern ist die Sprechschaltung SP verbunden. Sie dient im Zusammenhang mit dem Handapparat HA der Verarbeitung der im Ausführungsbeispiel auf analoge Weise übertragenen Sprachinformationen und bildet den Leitungsabschluß.

Eine derartige Vermittlungseinrichtung ist in ihrer Grundstruktur bekannt. Es erübrigt sich also insoweit eine detaillierte Darstellung der schaltungstechnischen Realisierung als auch eine Beschreibung der Vorgänge bei einem Verbindungaufbau und dem Verbindungsabbau. Die Prozessoren ZP und DP haben über den Systembus SB Zugriff zu den in der Speichereinrichtung SE abgelegten Daten. Diese betreffen u. a. das in dem Speicher P abgelegte gesamte Systemprogramm und die zu ihm gehörenden und im Arbeitsspeicher A enthaltenen betriebstechnischen Daten. In dem Speicherteil KD sind die Kundendaten abgelegt. Hierzu gehören beispielsweise die den einzelnen Teilnehmerendgeräten zugeteilten Berechtigungen für die Inanspruchnahme bestimmter Leistungsmerkmale. Das Konfigurieren dieser Daten kann beispielsweise über die Eingabetastatur einer als Betriebsterminal festlegbaren Endeinrichtung erfolgen.

Für die Realisierung von leistungsmerkmalsspezifischen Steuerprozeduren beinhaltet die Steuerrechnereinheit ZSt einzelne Programmsteuerungen, die auf die in den entsprechenden Speichern enthaltenen Steuerdaten zugreifen. So soll beispielsweise für die Vermittlungseinrichtung VE die Möglichkeit bestehen, einem Teilnehmer, der sich in einer Gesprächsverbindung befindet, den eigenen dringenden Verbindungswunsch anzukündigen. Dieses sogenannte "Anklopfen" besteht darin, daß von der Steuerrechnereinheit ein bestimmter Hinweiston in die für den gewünschten Teilnehmer bestehende Gesprächsverbindung periodisch eingeblendet wird. Gleichzeitig kann eine entsprechende Anzeige auf dem Display DL erfolgen, der auch die Identität des die Gesprächsverbindung anfordernden Teilnehmers entnehmbar ist. Die Einleitung dieses Leistungsmerkmals erfolgt nun nicht mittels einer entsprechenden Funktionstaste oder Kennzahlwahl, sondern es wird nach einer vorgegebenen Zeitspanne durch die Steuerrechnereinheit, die die einzelnen Verbindungsphasen überwacht, automatisch dieses "Anklopfen" aktiviert. Dies ist jedoch dann nicht der Fall, wenn für diese gewünschte Teilnehmerstelle eine externe Verbindung in den Wartezustand geschaltet ist. Dies geschieht beispielsweise dann, wenn während einer solchen externen Verbindung der Teilnehmer in Rückfrage geht, wobei dann mit der Einleitung dieser Rückfrage die externe Verbindung gehalten wird. Die Hinweisinformation auf den dringenden Verbindungswunsch wird erst dann abgesetzt, wenn der Teilnehmer in diese wartende Gesprächsverbindung erneut eingetreten ist. Dies setzt jedoch voraus, daß der anfordernde Teilnehmer seinen dringenden Verbindungswunsch weiterhin aufrechterhält. Dies erfolgt z. B. dadurch, daß der Handapparat HA noch abgehoben ist oder eine diesem Abheben entsprechende Funktion aktiviert ist. Von dem Augenblick an, an dem die hinweisende Information z. B. in Form eines entsprechenden Hinweistones abgesetzt wird, ändert sich für die dieses Gespräch anfordernde Teilnehmerstelle der bis dahin angelegte Besetztton in einen besonderen Rufton. Damit wird dann dieser Teilnehmer darüber informiert, daß angeklopft wird. Gleichzeitig kann auf dem Display DL des dem Teilnehmer zugeordneten Endgerätes ein entsprechender Hinweis erscheinen, ,aus dem auch die Identität des anfordernden Teilnehmers erkennbar ist.

Je nach Art der Vermittlungseinrichtung VE können zur Beantwortung des "Anklopfens" verschiedene Prozeduren vom gewünschten Teilnehmer durchgeführt werden. Es kann beispielsweise vorgesehen sein, daß durch die Betätigung einer speziellen Funktionstaste die bisherige Gesprächsverbindung ausgelöst und unmittelbar durch die Rechnersteuerung die Verbindung mit dem anfordernden Teilnehmer hergestellt wird. Es kann auch durch eine solche Tastenbetätigung der anfordernde Teilnehmer nach Art einer Konferenzverbindung zu dem bestehenden Gespräch hinzugeschaltet werden. Eine andere Variante besteht darin, daß nach dem Auflegen des angeklopften Teilnehmers und dem damit bedingten Auslösen seiner Gesprächsverbindung automatisch eine Verbindung zwischen dem anfordernden Teilnehmer und dem angeklopften Teilnehmer in üblicher Weise aufgebaut wird. Es wird also ein Ruf abgesetzt, und mit dem Abheben bzw. mit einer diesem Abheben äquivalenten Handhabung an der Endeinrichtung ist die Gesprächsverbindung mit dem anfordernden Teilnehmer hergestellt. Bis zum Zeitpunkt des Durchschaltens der Verbindung ändert sich dabei die Signalisierung für den anfordernden Teilnehmer nicht mehr.

Es kann vorgesehen sein, daß bei Gesprächsverbindungen, bei denen im Kundendatenspeicher gesondert gekennzeichnete Teilnehmer beteiligt sind, durch die diese gespeicherte Information auswertende Rechnersteuerung ein Anklopfen unterbunden wird.

## Patentansprüche

1. Verfahren zur Durchführung einer leistungsmerkmalsbezogenen Steuerprozedur im Zusammenhang mit der Möglichkeit, in einem rechnergesteuerten Kommunikationssystem (VE), insbesondere einem Key-Kommunikationssystem, einem Teilnehmer, der sich in einer Gesprächsverbindung befindet, einen ihn betreffenden dringenden Verbindungswunsch durch eine darauf hinweisende Information anzukündigen, wobei dieser Teilnehmer zur Beantwortung und zur Herstellung einer Verbindung mit dem diese Information auslösenden Teilnehmer eine bestimmte Prozedur vornehmen kann,
**dadurch gekennzeichnet,**
daß diese hinweisende Information automatisch beim Anwählen einer sich im Besetztzustand befindlichen Teilnehmerstelle (T1) nach Ablauf einer bestimmten Zeitspanne durch die die Verbindungsphasen überwachende Rechnersteuerung (ZSt) veranlaßt wird, sofern für diese betreffende Teilnehmerstelle (T1) nicht eine externe Verbindung in den Wartezustand geschaltet ist, daß erst nach der erneuten Wiederannahme dieser wartenden Gesprächsverbindung die hinweisende Information abgesetzt wird, falls durch den von der anfordernden Teilnehmerstelle aufrechterhaltenen Teilnehmerleitungsschleifenschluß das weitere Bestehen des Verbindungswunsches signalisiert wird.

2. Verfahren nach Anspruch 1,
**dadurch gekennzeichnet,**
daß für den die Information auslösenden Teilnehmer, der ursprünglich für seine Teilnehmerstelle angelegte Besetztton erst mit dem tatsächlich erfolgten Absetzen der hinweisenden Information in einen besonderen Rufton wechselt.

3. Verfahren nach Anspruch 1,
**dadurch gekennzeichnet,**
daß die hinweisende Information zu einer entsprechenden Darstellung auf dem Display des dem Teilnehmer zugeordneten Endgerätes führt und/oder in einem angeschalteten Hinweiston besteht.

4. Verfahren nach Anspruch 3,
**dadurch gekennzeichnet,**
daß die Identität des die Information bewirkenden Teilnehmers auf dem Display (DL) angezeigt wird.

5. Verfahren nach Anspruch 1,
**dadurch gekennzeichnet,**
daß mit der Beendigung der für die gewünschte Teilnehmerstelle (T1) bestehenden Gesprächsverbindung diese Teilnehmerstelle durch die die Verbindungsphasen überwachende Rechnersteuerung (ZSt) gerufen und mit dem Abheben bzw. mit dem Vollzug der ihr äquivalenten Handhabung die Gesprächsverbindung hergestellt ist.

6. Verfahren nach Anspruch 1,
**dadurch gekennzeichnet,**
daß bei Gesprächsverbindungen, bei denen eine im Kundendatenspeicher (KD) gesondert gekennzeichnete Teilnehmerstelle beteiligt ist, die Übertragung einer hinweisenden Information unterdrückt wird.

## Claims

1. Method for implementing a service-specific control procedure in connection with the possibility of announcing, in a computer-controlled communications system (VE), particularly a key-type communications system, to a subscriber who is in a call connection, an urgent request for connection relating to him by means of an information item indicating this, this subscriber being able to implement a particular procedure for responding and for establishing a connection to the subscriber triggering this information, characterized in that this indicating information is automatically initiated by the computer controller (ZSt), monitoring the connection phases, after a particular time interval has elapsed, when dialling a subscriber station (T1) which is in the busy state, unless an external connection has been switched to the waiting state for this relevant subscriber station (T1), that the indicating information is only transmitted after this waiting call connection has again been accepted, if the further existence of the request for connection is signalled by the subscriber line loop closure maintained by the requesting subscriber station.

2. Method according to Claim 1, characterized in that the busy tone originally applied for the subscriber station of the subscriber triggering the information only changes to a special ringing tone when the indicating information has actually been transmitted.

3. Method according to Claim 1, characterized in that the indicating information leads to a corresponding representation on the display of the terminal allocated to the subscriber and/or consists of a connected intercept tone.

4. Method according to Claim 3, characterized in that the identity of the subscriber producing the information is indicated on the display (DL).

5. Method according to Claim 1, characterized in that when the call connection existing for the desired subscriber station (T1) ends, this subscriber station is called by the computer controller (ZSt) monitoring the connection phases and the call connection is established with the picking-up of the handset or with the completion of its equivalent manipulation.

6. Method according to Claim 1, characterized in that the transmission of an indicating information item is suppressed in call connections in which a subscriber station specially identified in the customer data memory (KD) is involved.

## Revendications

1. Procédé de mise en oeuvre d'une procédure de commande en rapport avec des caractéristiques de puissance et en rapport avec la possibilité, dans un système de communication (VE) assisté par ordinateur, notamment un système de communication-Key, d'annoncer à un abonné qui se trouve dans une liaison de conversation, un souhait de liaison urgent le concernant, par une information indiquant ce souhait, cet abonné pouvant effectuer une procédure déterminée pour la réponse et l'établissement d'une liaison avec l'abonné qui déclenche cette information, caractérisé en ce que cette information d'indication est détectée, par l'unité de commande formant ordinateur (ZSt) et contrôlant les phases de liaison, automatiquement lors du choix d'un poste d'abonné (T1) se trouvant dans un état occupé, après un intervalle de temps déterminé, en supposant que, pour ce poste d'abonné concerné (T1), aucune liaison externe ne soit branchée dans l'état d'attente, que l'information d'indication est transmise juste après la nouvelle réception de cette liaison de conversation en attente, dans le cas où la présence du souhait de liaison est signalée par la fermeture de boucle de la ligne d'abonné maintenue par le poste d'abonné demandeur.

2. Procédé suivant la revendication 1, caractérisé en ce que, pour l'abonné déclenchant l'information, la tonalité occupée présente de manière usuelle sur son poste d'abonné, est tout d'abord transformée en une tonalité d'appel particulière, à l'aide de la transmission, effectuée de ce fait, de l'information d'indication.

3. Procédé suivant la revendication 1, caractérisé en ce que l'information d'indication conduit à une représentation correspondante sur l'écran du terminal associé à l'abonné, et/ou consiste en une tonalité d'indication branchée.

4. Procédé suivant la revendication 3, caractérisé en ce que l'identité de l'abonné provoquant l'information est indiqué sur l'écran (DL).

5. Procédé suivant la revendication 1, caractérisé en ce que à la fin de la liaison de conversation établie pour le poste d'abonné sollicité (T1), ce poste d'abonné est appelé par l'unité de commande formant ordinateur (ZSt) et contrôlant les phases de liaison, et la liaison de conversation est établie avec le décrochage ou l'exécution de la manoeuvre équivalente.

6. Procédé suivant la revendication 1, caractérisé en ce que la transmission d'une information d'indication est supprimée, pour des liaisons de conversation auxquelles participe un poste d'abonné désigné, en particulier dans la mémoire de données de l'utilisateur (KD).
